(19) Europäisches Patentamt
European Patent Office
Office européen des brevets

(11) **EP 1 480 485 A2**

(12) **EUROPÄISCHE PATENTANMELDUNG**

(43) Veröffentlichungstag:
**24.11.2004 Patentblatt 2004/48**

(51) Int Cl.⁷: $H04Q\ 7/38$

(21) Anmeldenummer: **04101689.0**

(22) Anmeldetag: **23.04.2004**

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**AL LT LV MK**

(30) Priorität: **21.05.2003 DE 10323004**

(71) Anmelder: **SIEMENS AKTIENGESELLSCHAFT**
**80333 München (DE)**

(72) Erfinder:
• **Mahr, Christian**
**89081, Ulm (DE)**
• **Warken, Markus**
**88471, Laupheim (DE)**

(54) **Verfahren zur Positionsbestimmung einer mobilen Station eines Funkkommunikationssystems sowie Vorrichtung und Funkkommunikationssystem**

(57)     Bei dem erfindungsgemäßen Verfahren zur Positionsbestimmung einer mobilen Station (UE) eines Funkkommunikationssystems (UMTS) wird ein Funkversorgungsbereich (Z) bestimmt, in dem sich die mobile Station (UE) befindet, und als Position (PO) der mobilen Station (UE) wird diejenige Position in dem Funkversorgungsbereich (Z) festgelegt, an der sich mobile Stationen innerhalb des Funkversorgungsbereichs (Z) mit der größten Wahrscheinlichkeit (P) aufhalten.

FIG 2

EP 1 480 485 A2

**Beschreibung**

Verfahren zur Positionsbestimmung einer mobilen Station eines Funkkommunikationssystems sowie Vorrichtung und Funkkommunikationssystem

Die Erfindung betrifft ein Verfahren zur Positionsbestimmung einer mobilen Station eines Funkkommunikationssystems sowie eine entsprechende Vorrichtung und ein entsprechendes Funkkommunikationssystem.

In Funkkommunikationssystemen ist es zur Übermittelung bestimmter Dienste an eine Mobilstation oder auch für Notfälle des Benutzers der Mobilstation nützlich, die Position der Mobilstation zu bestimmen.

Zu diesem Zweck werden mehrere Verfahren verwendet wie beispielsweise die Cell-ID-Methode. Mit dieser Methode wird die Funkzelle erkannt, in der sich die Mobilstation befindet. Die geografische Position der Funkzelle ist wiederum aus der Funknetzplanung bekannt. Die Genauigkeit dieser Methode liegt in der Größenordnung des Radius der Funkzelle.

Andere, genauere Verfahren wie beispielsweise die OTDOA-Methode (Observed Time Difference of Arrival) oder satellitenbasierte Positionierungsverfahren, werden entweder nicht von allen Mobilstationen eines Funkkommunikationssystems unterstützt oder benötigen einen hohen Rechenaufwand.

Die oben genannten Methoden sind beispielsweise aus der technischen Spezifikation 25.304V5.4.0 des 3GPP (3rd Generation Partnership Project) bekannt.

Die Erfindung hat die Aufgabe, ein Verfahren zur Positionsbestimmung einer mobilen Station anzugeben, das eine genauere Position ergibt als dies mit bekannten auf einem Funkversorgungsbereich der mobilen Station basierenden Methoden möglich ist.

Diese Aufgabe wird mit dem Verfahren sowie der Vorrichtung und dem Funkkommunikationssystem gemäß den unabhängigen Ansprüchen gelöst.

Vorteilhafte Aus- und Weiterbildungen der Erfindung sind Gegenstand der abhängigen Ansprüche.

Bei dem erfindungsgemäßen Verfahren zur Positionsbestimmung einer mobilen Station eines Funkkommunikationssystems wird ein Funkversorgungsbereich bestimmt, in dem sich die mobile Station befindet, und als Position der mobilen Station wird diejenige Position in dem Funkversorgungsbereich festgelegt, an der sich mobile Stationen innerhalb des Funkversorgungsbereichs mit der größten Wahrscheinlichkeit aufhalten. Ist für mobile Stationen, die sich in dem Funkversorgungsbereich aufhalten, beispielsweise eine Aufenthaltswahrscheinlichkeit für eine Vielzahl von Positionen im Funkversorgungsbereich bekannt, so gibt es eine Position bzw. kann eine Position bestimmt werden, an der sich mobile Stationen mit der größten Wahrscheinlichkeit aufhalten. An dieser Position halten sich alle mobilen Stationen und somit auch die mobile Station deren Position bestimmt werden soll mit der größten Wahrscheinlichkeit auf. Durch die Erfindung lässt sich, mittels Kenntnis über das Verhalten von mobilen Stationen im Funkbereich, eine genauere Position für die mobile Station festlegen als dies allein aus der Kenntnis über die geografische Lage des Funkversorgungsbereichs möglich wäre.

In einer bevorzugten Ausgestaltung der Erfindung wird die Position mit der größten Wahrscheinlichkeit mittels einer Statistik über Aufenthaltsorte mobiler Stationen bestimmt. So kann die festgelegte Position die aktuellen Bedingungen innerhalb des Funkversorgungsbereiches berücksichtigen. Die Statistik kann vom Funkkommunikationssystem einmalig, beispielsweise im Rahmen des Aufbaus des Funkkommunikationssystems, oder in einstellbaren Zeitabständen wiederholt gemessen werden. Selbstverständlich können auch je nach Tageszeit unterschiedliche Statistiken verwendet werden. Auf diese Weise können tageszeitabhängige Aufenthaltswahrscheinlichkeiten für mobile Stationen berücksichtigt werden.

Alternativ liegt in einem Funkversorgungsbereich ein markanter Bereich, an dem mobile Stationen sich häufig aufhalten. Durch Festlegung der Position der mobilen Station in dem Bereich, beispielsweise als Mittelpunkt des Bereichs, kann die Position innerhalb des Funkversorgungsbereichs präzisiert werden. Obwohl die so festgelegte Position nicht immer der tatsächlichen Position der mobilen Station entspricht, ist die Positionsbestimmung im Mittel genauer als durch eine Bestimmung ausschließlich anhand des Funkversorgungsbereichs, da sich die mobile Station in dem Funkversorgungsbereich mit der größten Wahrscheinlichkeit in dem markanten Bereich aufhält. Ein markanter Bereich ist beispielsweise ein Flughafen, ein Bahnhof, ein Freizeitpark oder ein Bürokomplex. Als Funkversorgungsbereich in dem sich die mobile Station befindet, kann ein Funkversorgungsbereich bestimmt werden, in dem die mobile Station eine Funkverbindung unterhält. Innerhalb eines bekannten markanten Bereichs kann die Position durch Verwendung der im vorigen Absatz genannten Statistik über Aufenthaltsorte mobiler Stationen weiter präzisiert werden.

Vorteilhafter Weise ist der Funkversorgungsbereich eine Funkzelle eines zellularen Funknetzes.

Besonders genau wird die Bestimmung der Position der mobilen Station, wenn wenigstens eine weitere Funkzelle bestimmt wird, in der sich die mobile Station gleichzeitig befindet und als Position der mobilen Station diejenige Position festgelegt wird, an der sich mobile Stationen im Überlappungsbereich der Funkzellen mit der größten Wahrscheinlichkeit aufhalten. Im Überlappungsbereich befindet sich die mobile Station, wenn sie beispielsweise wenigstens eine Funkverbindung mit jeder Funkzellen hat.

Eine besonders vorteilhafte Weiterbildung der Erfindung sieht vor, dass die Position mit der größten Wahrscheinlichkeit im Überlappungsbereich der Funkzellen mittels einer Statistik für jede Funkzelle über Aufenthaltsorte anderer mobiler Stationen innerhalb der jeweiligen Funkzelle bestimmt wird. Eine Berechnung einer Wahrscheinlichkeitsverteilung für die Aufenthaltsorte mobiler Stationen in dem Überlappungsbereich anhand von entsprechenden Statistiken für jede einzelne Funkzelle ermöglicht eine möglichst genaue Berechnung der Position der mobilen Station.

Eine alternative Weiterbildung sieht vorteilhafter Weise vor, dass die Position mit der größten Wahrscheinlichkeit im Überlappungsbereich der Funkzellen mittels einer Statistik über Aufenthaltsorte anderer mobiler Stationen bestimmt wird, wobei für die Statistik ausschließlich andere mobile Stationen verwendet werden, die sich in gleicher Weise wie die mobile Station im Überlappungsbereich befinden. Es werden also für die Ermittlung der Statistik nur mobile Stationen verwendet, die in den gleichen Funkzellen eine Funkverbindung haben, wie die mobile Station.

Die zuletzt genannten Weiterbildungen ergeben beide eine verbesserte Positionsbestimmung für eine mobile Station in Handover-Situationen. Die im vorletzten Absatz beschriebene Weiterbildung behandelt jedoch alle Überlappungsbereiche eines Funkkommunikationssystems gleich und ist unabhängig von einstellbaren Größen mit denen ein Betreiber des Funkkommunikationssystems Handoverstrategien steuert (z. B. Handoverschwellwerte). Die im letzten Absatz beschriebene alternative Weiterbildung ist hingegen von den einstellbaren Größen abhängig. Der Betreiber des Funkkommunikationssystems hat daher zusätzlich zu der verbesserten Positionsbestimmung die Möglichkeit, das Verhalten mobiler Stationen in einer Handover-Situation für jeden einzelnen Überlappungsbereich zu bestimmen und kann die einstellbaren Größen optimieren.

Eine besonders genaue Statistik über Aufenthaltsorte von mobilen Stationen lässt sich bestimmen, wenn die Statistik über Aufenthaltsorte mobiler Stationen mittels eines satellitengestützten Positionierungsverfahren ermittelt wird.

Die Vorrichtung und das Funkkommunikationssystem weisen alle zur Durchführung des erfindungsgemäßen Verfahrens nötigen Merkmale auf.

Die Erfindung wird im folgenden anhand von in den Figuren dargestellten Ausführungsbeispielen näher erläutert. Es zeigen:

Fig. 1     ein erstes Ausführungsbeispiel einer erfindungsgemäßen Positionsbestimmung in einem Wireless Local Area Network (WLAN),

Fig. 2     ein zweites Ausführungsbeispiel einer erfindungsgemäßen Positionsbestimmung in einem Funkkommunikationssystem nach dem UMTS-(Universal Mobile Telecommunication System) Standard und

Fig. 3     ein drittes Ausführungsbeispiel einer erfindungsgemäßen Positionsbestimmung in dem Funkkommunikationssystem gemäß Figur 2.

Gleiche Bezugszeichen in den Figuren bezeichnen gleiche Gegenstände.

Im nachfolgenden wird als mobile Station eine Mobilstation betrachtet. Eine Mobilstation ist beispielsweise ein Mobiltelefon oder auch eine ortsbewegliche Vorrichtung zur Übertragung von Bild- und/oder Tondaten, zum Fax-, Short Message Service SMS- und Email-Versand und zum Internet-Zugang. Es handelt sich mithin um eine allgemeine Sende- und/oder Empfangseinheit eines Funkkommunikationssystems.

Die Erfindung kann vorteilhaft in beliebigen Funkkommunikationssystemen verwendet werden. Unter Funkkommunikationssystemen sind beliebige Systeme zu verstehen, in denen eine Datenübertragung zwischen Stationen über eine Funkschnittstelle erfolgt. Die Datenübertragung kann sowohl bidirektional als auch unidirektional erfolgen. Funkkommunikationssysteme sind insbesondere beliebige Mobilfunksysteme beispielsweise nach dem GSM-(Global System for Mobile Communication) oder dem UMTS-Standard. Auch zukünftige Mobilfunksysteme beispielsweise der vierten Generation sowie Ad-hoc Netze und sogenannte WLANs (Wireless Local Area Networks) sollen unter Funkkommunikationssystemen verstanden werden.

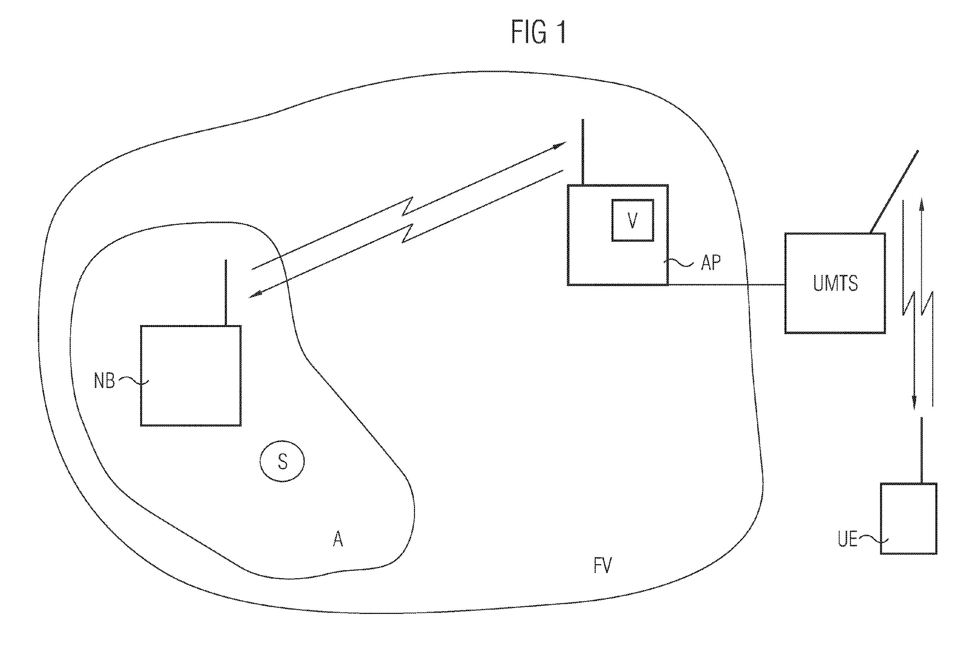

In einem ersten Ausführungsbeispiel, das in Figur 1 schematisch dargestellt ist, befindet sich eine Mobilstation NB, beispielsweise ein tragbarer Computer, in einem Funkversorgungsbereich FV eines WLANs. Die Mobilstation NB kommuniziert über einen Zugangspunkt AP und ein mit dem Zugangspunkt AP verbundenes Funkkommunikationssystem UMTS mit einer weiteren Mobilstation UE, beispielsweise einem Mobiltelefon.

Die weitere Mobilstation UE fordert von ihrem Funkkommunikationssystem UMTS eine Positionsbestimmung für die Mobilstation NB an. Das Funkkommunikationssystem UMTS erkennt, dass die Mobilstation NB dem WLAN zugeordnet ist und gibt die Positionsanfrage an den Zugangspunkt AP weiter. Mittels einer Vorrichtung V zur Positionsbestimmung legt der Zugangspunkt AP als Position der Mobilstation NB einen Ort S fest. Aufgrund einer im Zugangspunkt AP gespeicherten Tabelle weiß der Zugangspunkt AP, dass sich Mobilstationen innerhalb seines Funkversorgungsbereiches FV bevorzugt, d. h. mit der größten Wahrscheinlichkeit, innerhalb eines bestimmten Bereichs A aufhalten. Die Mitte dieses Bereichs A ist der Ort S.

Bei dem Bereich A handelt es sich um einen markanten Bereich, wie beispielsweise einen Bürokomplex, einen Bahnhof oder einen Flughafen, für den angenommen werden kann, dass sich dort die Mehrzahl der durch den Zugangspunkt AP versorgten Mobilstationen aufhalten.

Selbstverständlich kann der Bereich A bzw. der Ort S auch anhand einer Statistik über Aufenthaltsorte von Mobilstationen bestimmt werden. Die Statistik wird anhand einer Vielzahl von Mobilstationen im Funkversorgungsbereich FV mittels möglichst genauer Positionsbestimmungsverfahren, beispielsweise mittels eines satellitengestützten Verfahrens, ermittelt und in der Tabelle gespeichert und aktualisiert.

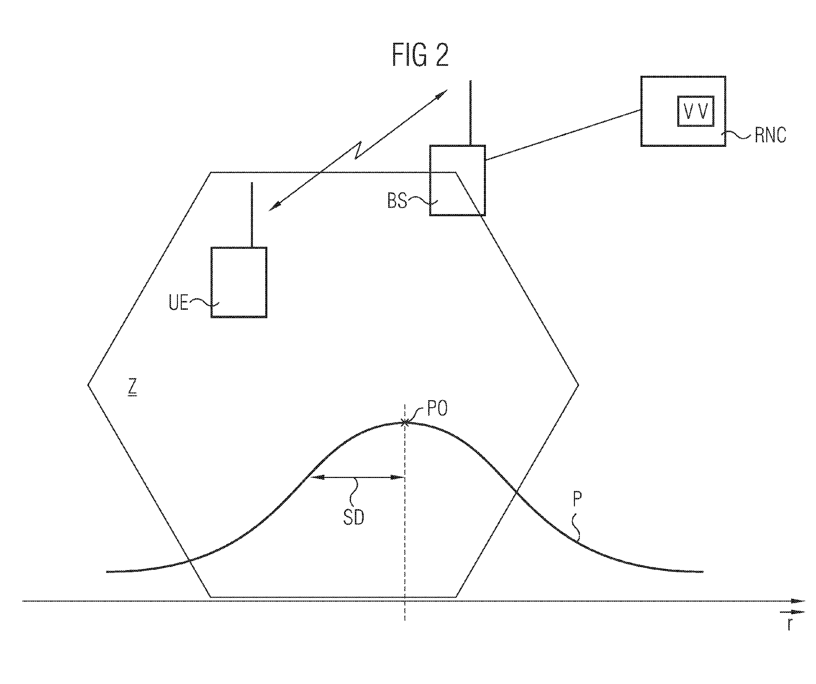

In einem in Figur 2 schematisch dargestellten zweiten Ausführungsbeispiel liegt im Funkkommunikationssystem UMTS eine Positionsanfrage für eine Mobilstation UE vor. Die Mobilstation UE befindet sich in einer Funkzelle Z und hat eine Funkverbindung F mit einer Basisstation BS, die mit einem Funknetzkontroller RNC verbunden ist. Das Funkkommunikationssystem UMTS verfügt neben der Funkzelle Z noch über eine Vielzahl weiterer Funkzellen, die der Übersichtlichkeit halber nicht dargestellt sind.

Der Funknetzkontroller RNC verfügt über eine Vorrichtung VV zur Positionsbestimmung. In dieser Vorrichtung VV ist eine Tabelle gespeichert, der eine Wahrscheinlichkeitsverteilung für Aufenthaltsorte von Mobilstationen für jede Funkzelle entnehmbar ist. Insbesondere ist dort eine Wahrscheinlichkeitsverteilung P für Aufenthaltsorte innerhalb der Funkzelle Z gespeichert. Aus dieser Wahrscheinlichkeitsverteilung P kann sowohl eine Position PO mit der größten Aufenthaltswahrscheinlichkeit in der Funkzelle Z als auch eine Standardabweichung SD, d. h. ein Fehler der Position PO, bestimmt werden.

Eine Wahrscheinlichkeitsverteilung, d. h. eine ortsabhängige Aufenthaltswahrscheinlichkeit, wird für jede Funkzelle des Funkkommunikationssystems UMTS bestimmt. Dazu dienen Mobil stationen, die über einen Empfänger zur Durchführung eines satellitengestützten Positionierungsverfahrens verfügen. In vom Betreiber des Funkkommunikationssystem festlegbaren Zeitintervallen wird für derartige Mobilstationen eine Positionsbestimmung durchgeführt. Aus den so ermittelten genauen Positionen der Mobilstationen mit einem entsprechenden Empfänger werden für jede Funkzelle die Wahrscheinlichkeitsverteilungen und Standardabweichungen sowie entsprechend Punkte mit der größten Aufenthaltswahrscheinlichkeit bestimmt. Für jede Position innerhalb einer Funkzelle kann mittels der Wahrscheinlichkeitsverteilung eine Aufenthaltswahrscheinlichkeit angegeben werden.

Da sich alle Mobilstationen statistisch in gleicher Weise verhalten, kann eine derart ermittelte Wahrscheinlichkeitsverteilung für alle Mobilstationen in dem Funkkommunikationssystem verwendet werden. Insbesondere können die für alle Punkte des Funkkommunikationssystems bekannten Aufenthaltswahrscheinlichkeiten ausgewertet und für eine Funknetzplanung verwendet werden.

Selbstverständlich können zur Bestimmung von Wahrscheinlichkeitsverteilungen auch andere Positionsbestimmungsverfahren wie beispielsweise das eingangs genannte OTDOA-Verfahren (OTDOA: Observed Time Difference of Arrival) verwendet werden.

Zur Positionsbestimmung der Mobilstation UE bestimmt die Vorrichtung VV die Funkzelle Z, in der sich die Mobilstation UE befindet. Hierzu wird das bekannte Cell-ID-Verfahren verwendet. Selbstverständlich kann auch eine andere Einrichtung des Funkkommunikationssystems das Cell-ID-Verfahren durchführen und der Vorrichtung VV das Ergebnis mitteilen. Anhand der dann bekannten Funkzelle Z der Mobilstation UE entnimmt die Vorrichtung VV die Position PO mit der größten Wahrscheinlichkeit aus ihrer Tabelle und legt diese Position PO als Position der Mobilstation UE fest. Der Fehler dieser Positionsbestimmung ist durch die Standardabweichung SD gegeben und wird einer die Position erfragenden Einrichtung automatisch oder auf Anfrage übermittelt.

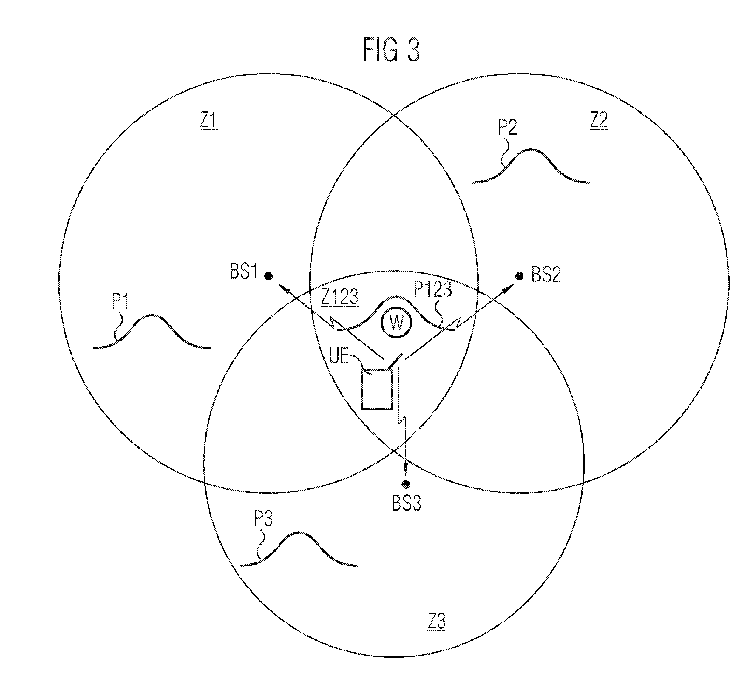

In einem in Figur 3 dargestellten dritten Ausführungsbeispiel, befindet sich die Mobilstation UE im sogenannten Soft-Handover, d. h. die Mobilstation UE hat gleichzeitig Funkverbindungen in mehreren Funkzellen Z1, Z2, Z3, in diesem Beispiel in drei Funkzellen Z1, Z2, Z3 mit jeweils einer Basisstation BS1, BS2, BS3. Die Mobilstation befindet sich also in einem Überlappungsbereich Z123 der drei Funkzellen Z1, Z2, Z3.

Für jede Funkzelle Z1, Z2, Z3 existiert eine Wahrscheinlichkeitsverteilung P1, P2, P3 für die Position mobiler Stationen. Aufgrund einer Positionsanfrage stellt der Funknetzkontroller RNC fest, dass die Mobilstation sich gleichzeitig in drei Funkzellen Z1, Z2, Z3 befindet. Zur Ermittlung der wahrscheinlichsten Position W der Mobilstation UE verwendet die Vorrichtung VV die Wahrscheinlichkeitsverteilungen P1, P2, P3 der drei Funkzellen Z1, Z2, Z3. Die gesamte Wahrscheinlichkeitsverteilung P123 ist gegeben durch das Produkt der drei Wahrscheinlichkeitsverteilungen P1, P2, P2:

$$P123 = P1 * P2 * P3.$$

Insbesondere ist die Wahrscheinlichkeit, die Mobilstation UE in einer Funkzelle Z1, Z2, Z3 zu finden, nur im Überlappungsbereich Z123 der drei Funkzellen Z1, Z2, Z3 von Null ver schieden, d. h. die gesamte Wahrscheinlichkeitsverteilung P123 ist nur im Überlappungsbereich Z123 von Null verschieden.

Die wahrscheinlichste Position $\vec{W}$ der Mobilstation UE im Überlappungsbereich Z123 der Funkzellen Z1, Z2, Z3 ergibt sich aus der gesamten Wahrscheinlichkeitsverteilung P123 durch folgende Integration:

$$\vec{W} = \int P123\left(\vec{r}\right)\vec{r}\, d\vec{r}$$

Wobei $\vec{r}$ ein Ortsvektor in einem verwendeten Koordinatensystem ist. In diesem Beispiel wird ein kartesisches Koordinatensystem verwendet und es ist $\vec{r} = (x, y, z)$

Die Standardabweichung ist in kartesischen Koordinaten für eine Komponente $W_n$ von $\vec{W}$ mit n = x, y oder z gegeben durch:

$$\Delta W_n = \left( \int P123(\vec{r})\,(r_n - W_n)^2 \, d\vec{r} \right)^{1/2}$$

In einem alternativen Ausführungsbeispiel wird für Überlappungsbereiche von Funkzellen eine eigene Statistik bestimmt. Dazu wird die Aufenthaltswahrscheinlichkeit von Mobilstationen in Überlappungsbereichen ausschließlich anhand von Mobilstationen bestimmt, die sich in den entsprechenden Überlappungsbereichen befinden und mit den entsprechenden Basisstationen der Funkzellen eine Verbindung haben.

Für den Überlappungsbereich Z123 aus Figur 3 wird in diesem Ausführungsbeispiel bei der Positionsbestimmung der Mobilstation UE eine Statistik über Aufenthaltsorte von Mobilstatio nen verwendet, die anhand von Mobilstationen erstellt wurde, die sich ebenso wie die Mobilstation UE in diesem Überlappungsbereich Z123 befanden und mit den drei Basisstationen BS1, BS2, BS3 eine Funkverbindung hatten.

Selbstverständlich kann auch die Mobilstation über eine entsprechende Vorrichtung zur Bestimmung ihrer Position verfügen. Diese Vorrichtung hat eine Tabelle mit Statistiken über Aufenthaltsorte anderer Mobilstationen gespeichert. Die Tabelle wird aus dem Funkkommunikationssystem heruntergeladen (download) oder beim Verbindungsaufbau automatisch an die Mobilstation übertragen. Die Tabelle kann in einstellbaren Zeitintervallen vom Funkkommunikationssystem aktualisiert werden. Alternativ erhält die Vorrichtung die Statistiken jeweils aktuell bei einer Positionsbestimmung vom Funkkommunikationssystem, d. h. die Tabelle ist im Funkkommunikationssystem gespeichert.

**Patentansprüche**

1. Verfahren zur Positionsbestimmung einer mobilen Station eines Funkkommunikationssystems, bei dem

   - ein Funkversorgungsbereich bestimmt wird, in dem sich die mobile Station befindet,
   - und als Position der mobilen Station diejenige Position in dem Funkversorgungsbereich festgelegt wird, an der sich mobile Stationen innerhalb des Funkversorgungsbereichs mit der größten Wahrscheinlichkeit aufhalten.

2. Verfahren nach Anspruch 1, bei dem der Funkversorgungsbereich eine Funkzelle eines zellularen Funknetzes ist.

3. Verfahren nach einem der vorstehenden Ansprüche, bei dem die Position mit der größten Wahrscheinlichkeit mittels einer Statistik über Aufenthaltsorte mobiler Stationen bestimmt wird.

4. Verfahren nach einem der Ansprüche 2, bei dem

   - wenigstens eine weitere Funkzelle bestimmt wird, in der sich die mobile Station gleichzeitig befindet,
   - und als Position der mobilen Station diejenige Position festgelegt wird, an der sich mobile Stationen im Überlappungsbereich der Funkzellen mit der größten Wahrscheinlichkeit aufhalten.

5. Verfahren nach Anspruch 4, bei dem die Position mit der größten Wahrscheinlichkeit im Überlappungsbereich der Funkzellen mittels einer Statistik für jede Funkzelle über Aufenthaltsorte anderer mobiler Stationen innerhalb der jeweiligen Funkzelle bestimmt wird.

6. Verfahren nach Anspruch 4, bei dem die Position mit der größten Wahrscheinlichkeit im Überlappungsbereich der Funkzellen mittels einer Statistik über Aufenthaltsorte anderer mobiler Stationen bestimmt wird, wobei für die Statistik ausschließlich andere mobile Stationen verwendet werden, die sich in gleicher Weise wie die mobile Station im Überlappungsbereich befinden.

7. Verfahren nach einem der vorstehenden Ansprüche, bei dem die Statistik über Aufenthaltsorte mobiler Stationen mittels eines satellitengestützten Positionierungsverfahren ermittelt wird.

8. Vorrichtung zur Positionsbestimmung einer mobilen Station eines Funkkommunikationssystems,

   - mit Mitteln zur Bestimmung eines Funkversorgungsbereichs, in dem sich die mobile Station befindet,
   - mit Mitteln zur Festlegung der Position der mobilen Station als diejenige Position in dem Funkversorgungsbereich, an der sich mobile Stationen innerhalb des Funkversorgungsbereichs mit der größten Wahrscheinlichkeit aufhalten.

9. Vorrichtung nach Anspruch 8, mit Mitteln zur Bestimmung der Position mit der größten Wahrscheinlichkeit mittels einer Statistik über Aufenthaltsorte anderer mobiler Stationen.

10. Funkkommunikationssystem mit einer Vorrichtung nach Anspruch 8 oder 9.

FIG 1

EP 1 480 485 A2

FIG 2

EP 1 480 485 A2

# FIG 3